# EUROPÄISCHE PATENTSCHRIFT

(11) **EP 2 921 820 B1**
(45) Veröffentlichungstag und Bekanntmachung des Hinweises auf die Patenterteilung: **29.05.2019**
(21) Anmeldenummer: 15160128.3
(22) Anmeldetag: 20.03.2015
(51) Int. Cl.: G01C 15/00

(54) **HALTEVORRICHTUNG FÜR EINEN NIVELLIERLASER**
HOLDING DEVICE FOR A LEVELLING LASER
DISPOSITIF DE MAINTIEN POUR UN LASER DE NIVELLEMENT

(30) Priorität: 21.03.2014 CH 4322014
(43) Veröffentlichungstag der Anmeldung: 23.09.2015
(73) Patentinhaber: Fischli, Alois, 8752 Näfels (CH); Camenzind, Rene, 8752 Näfels (CH)
(72) Erfinder: Fischli, Alois, 8752 Näfels (CH); Camenzind, Rene, 8752 Näfels (CH)
(74) Vertreter: Riederer Hasler & Partner Patentanwälte AG

(56) Entgegenhaltungen:
- EP-A2- 1 564 524
- WO-A1-2009/048689
- DE-U1- 20 003 940
- FR-A1- 2 265 549
- FR-A1- 2 700 587
- US-A- 5 667 177
- US-A1- 2010 276 555

## Beschreibung

### Gebiet der Erfindung

Die Erfindung betrifft eine Haltevorrichtung für Nivellierlaser gemäss Oberbegriff des Anspruchs 1.

### Stand der Technik

Auf Baustellen werden Nivellierlaser für die Nivellierung von Flächen eingesetzt. Diese Laser werden typischerweise auf einem Dreibeinstativ gehalten. Das Dreibeinstativ benötigt jedoch für die stabile Aufstellung relativ viel Platz, welcher auf Baustellen nicht immer in der Nähe der zu vermessenden Fläche zur Verfügung steht. Deshalb muss auf Baustellen oftmals mühsam nach einem geeigneten Standort für das Dreibeinstativ gesucht werden.

Sind auf der Baustelle Mauerdurchbrüche vorhanden, so werden Klemmstative benutzt. Diese sind als teleskopierbare Stange ausgeführt welche in den Mauerdurchbruch eingeklemmt werden kann. Ein solcherart befestigtes Klemmstativ dient als Halterung für den Nivellierlaser.

In der US 2010/0276555 A1 ist eine Haltevorrichtung für ein Laser-Instrument offenbart. Die Haltevorrichtung stellt eine Verbesserung des oben beschriebenen Stands der Technik dar, da keine Stative für die Befestigung des Laser Instruments benötigt werden. Die Haltevorrichtung hält einerseits das Laser Instrument und lässt sich andererseits an einer Wand befestigen. Dazu lässt es sich an einer Schraube aufhängen oder an einem vertikalen Rohr mit einem Gurt befestigen. Auch kann die Haltevorrichtung mit Magneten an einem magnetischen Untergrund gehalten sein. Allerdings muss ein passender Haltegegenstand zuvor an der Wand befestigt werden.

US 6,438,854 zeigt eine Haltevorrichtung für ein Laser-Markiergerät. Die Halterung erfolgt mittels einer Klemmvorrichtung. Die Klemmvorrichtung funktioniert ähnlich einer Kartuschenpresse, wobei jedoch zwischen den Klemmbacken keine Kartusche sondern ein Balken einklemmbar ist. Für das Festklemmen der Haltevorrichtung muss jedoch ein Balken oder ein rechteckiger Vorsprung an einer Wand vorhanden sein oder befestigt werden.

### Aufgabe der Erfindung

Aufgabe der vorliegenden Erfindung ist es, eine Halterung für einen Nivellierlaser vorzuschlagen, welche rasch an einer Vielzahl von Standorten auf einer Baustelle aufstellbar ist, ohne langwierig nach einem geeignetem Standort suchen zu müssen.

### Beschreibung

Erfindungsgemäss wird die Aufgabe bei einer Halterung für ein Nivelliergerät gemäss dem Anspruch 1 gelöst. Für die erfindungsgemässe Halterung muss ganz anders wie bei einem Dreibeinstativ kein Stellplatz gesucht werden, sondern die Halterung kann in Wandaussparungen befestigt werden. Bevorzugt wird die Konsole ursprünglich zur Erstellung von Laufstegen an Wänden verwendet. So ist eine einwandfreie Passform an der Wand sichergestellt, da die Wandaussparungen ohnedies für solche Kletterkonsolen vorgesehen sind.

Es können bestehende Wandaussparungen, welche beispielsweise für das Einhängen einer Kletterkonsole oder die Halterung von Schalungsplatten ohnedies vorhanden sind zusätzlich zur Halterung des Nivellierlasers benutzt werden. Solche Wandaussparungen sind in regelmässigen Abständen vorhanden und demnach kann rasch eine passende Position für die Halterung gefunden werden. Das mühsame Suchen eines Stellplatzes, insbesondere für ein Dreibeinstativ, ist nicht notwendig. Zweckmässigerweise ist die Wandaussparung durch eine eingemauerte Hülse gebildet. Die Hülse ist zumeist in die Wand einbetoniert und verstärkt die Wandaussparung durch Armierungen oder Vorsprünge, damit die Hülse bei Gewichtsbelastung nicht aus der Wand ausbricht. Die Halterung besitzt samt Laser ein vergleichsweise geringes Gewicht und ist daher sicher in der Wandaussparung gehalten.

Als vorteilhaft erweist es sich, wenn das Wandelement ein Haken ist, welcher in einem Vorsprung des Hohlraums einhängbar ist. Die Konsole kann daher rasch und sicher an der Wand befestigt werden und von dieser wieder gelöst werden.

In einem weiteren Ausgestaltungsbeispiel der Erfindung ist an dem Haken eine Ausnehmung vorgesehen, in welche der Vorsprung hineinragen kann, wodurch die Halterung durch Formschluss an der Wand befestigbar ist. Eine formschlüssige Halterung hat den Vorteil, dass durch diese die Wandhalterung sehr sicher an der Wand gehalten ist und die Verbindung bei Bedarf trotzdem rasch lösbar ist, indem die Wandhalterung nach oben und dann weg von der Wand bewegt wird.

Mit Vorteil ist der Haken in seiner Länge, welche normal zur Wand orientiert ist, zwischen einer ersten entspannten Position und einer zweiten verspannten Position verstellbar. Dadurch kann die Konsole durch Hineinschieben des Hakens in die Konsole an die Wand gezogen werden.

Als vorteilhaft erweist es sich, wenn die Konsole einen Rahmen umfasst, in welchem der Haken verschiebbar aufgenommen ist. Der Verschiebemechanismus ist hierdurch stabil ausgeführt und trotzdem einfach zu bedienen.

Zweckmässigerweise ist in dem Rahmen eine Feder angeordnet, welche den Haken in die entspannte Position drückt. Dadurch befindet sich der Haken vor der Montage immer in der entspannten Position und kann dann in Abhängigkeit von der Dicke des Vorsprungs stufenlos in der verspannten Position fixiert werden.

In einer weiteren bevorzugten Ausführungsform ist die Konsole an einer Einhängplatte eingehängt, welche ihrerseits mit einer Schraube an der Mauer gehalten werden kann. Die Einhängplatte dient dabei als Adapter, um die Halterung auch an anderen in die Wand einbetonierten Hülsen befestigen zu können, in welche die Konsole nicht einhängbar ist oder an jeder beliebigen Stelle an der Wand einhängen zu können. Bevorzugt hat die Einhängplatte mehrere Möglichkeiten die Konsole einzuhängen, um bei der Positionierung des Nivellierlasers an der Wand möglichst flexibel zu sein.

Dadurch, dass die Konsole mit einer Schraube in der Hülse gehalten ist, können auch Schraub- bzw. Ankerhülsen zur Halterung der Konsole dienen. Es können daher alle denkbaren Wandaussparungen zur Befestigung der erfindungsgemässen Halterung herangezogen werden.

Zweckmässigerweise ist die Haltestange teleskopierbar, indem ein erstes Halterohr relativ zu einem zweiten Halterohr verschiebbar ist. Dadurch kann der Nivellierlaser rasch auf die benötigte Höhe eingestellt werden. Die Feststellung des ersten Halterohr in dem zweiten Halterohr erfolgt zweckmässigerweise mit einer Klemmschraube, wodurch die Höhenverstellung stufenlos erfolgt.

Mit Vorteil weist die Hülse Vorsprünge als Auszugssicherung aus der Wand auf. Die Hülse hält die Halterung samt Nivellierlaser daher zuverlässig in der Wand.

Der Abstand der Haltestange von dem Haltelement beträgt wenigstens 10 cm und höchstens 30 cm. Dieser Abstand entspricht auch dem Abstand des Nivellierlasers von der Wand, an der er befestigt ist. Bei diesem Abstand wird die Justierung des Lasers von der Wand nicht behindert und der Abstand ist auch nicht zu gross um den Benutzer bei der Bedienung des Lasers zu stören.

In noch einem Ausführungsbeispiel der Erfindung ist das Anschlussteil lösbar an dem ersten Ende der Haltestange gehalten. Dadurch kann der an dem Anschlussteil angeschraubte Nivellierlaser mitsamt dem Anschlussteil rasch von der Haltestange entfernt werden.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine Seitenansicht einer ersten Ausführungsform einer Halterung für einen Nivellierlaser und
- Figur 2:: eine Seitenansicht einer zweiten Ausführungsform einer Halterung für einen Nivellierlaser.

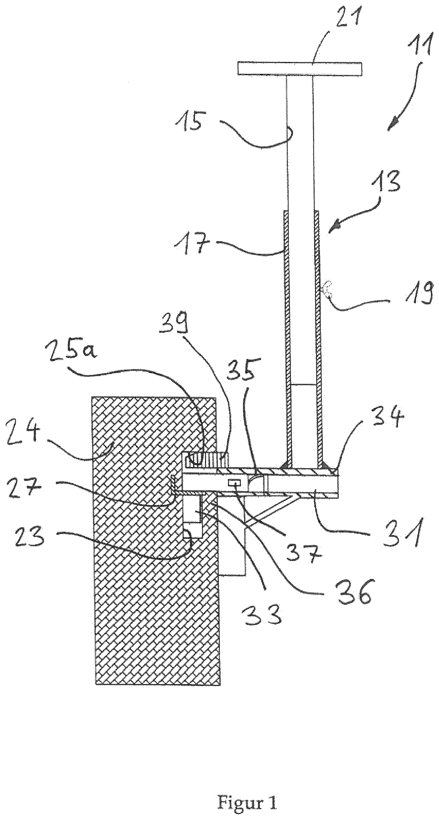

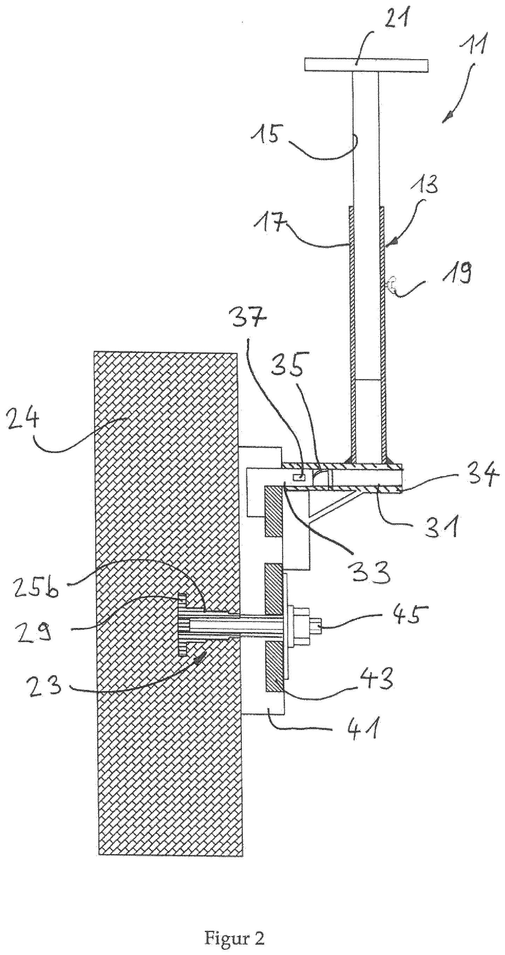

In den Figuren 1 und 2 sind zwei Ausführungsformen einer Halterung für einen Nivellierlaser gezeigt, welche gesamthaft mit dem Bezugszeichen 11 bezeichnet sind. Die Halterung 11 beinhaltet eine teleskopierbare Haltestange 13. Zur Erzielung der Teleskopfunktion umfasst die Haltestange 13 ein erstes Halterohr 15, welches in ein zweites Halterohr 17 einschiebbar ist. Es versteht sich, dass der Innendurchmesser des zweiten Halterohrs 17 an den Aussendurchmesser des ersten Halterohrs 15 derart angepasst ist, dass das erste Halterohr 15 wackelfrei in dem zweiten Halterohr 17 verschiebbar ist. Zur Fixierung des ersten Halterohr 15 in einer gewünschten Höhe ist eine Flügelschraube 19 vorgesehen, welche das erste Halterohr 15 an dem zweiten Halterohr 17 festklemmt. An dem oberen Ende des ersten Halterohrs 15 ist ein Anschlussteil bzw. eine Befestigungsplatte 21 festgelegt, an der ein Nivellierlaser befestigt (angeschraubt) werden kann.

Zur raschen Aufstellung des Nivellierlasers, kann die Haltestange 13 an Wandaussparungen 23 befestigt werden, welche ohnedies an einer Wand 24 oder einer Decke vorhanden sind. Zu vorhandenen Wandaussparungen 23 zählen erste Hülsen 25a, in welche eine Kletterkonsole einhängbar ist oder zweite Hülsen 25b, welche zur Halterung von Schalungsplatten dienen. Die Hülsen 25a,25b wurden bereits bei der Herstellung der Beton(wand) in diese eingegossen bzw. einbetoniert und verfügen über Auszugssicherungen wir Drahtbügel 27 oder Vorsprünge 29.

Zur Befestigung ist das zweite Halterohr 17 an einer handelsüblichen Konsole 31 befestigt, insbesondere angeschweisst. Die Konsole 31, auch als Kletterkonsole bezeichnet, dient dem Aufbau eines Laufsteges entlang der Wand 24. Die Konsole 31 wird erfindungsgemäss zur Befestigung der Haltestange 13 herangezogen. Zur Halterung in der Hülse 25a wird die Konsole 25a mit einem Haken 33 in der Hülse 25a eingehängt. Der Haken 33 ist in einem Rahmen 34 der Konsole 31 verschiebbar und mit einer Feder 35 vorgespannt, welche den Haken 33 aus der Konsole 31 drückt. Der Rahmen 34 kann beispielsweise durch ein Hohlprofil gebildet sein, in welchem der Haken 33 verschiebbar geführt ist. Bevorzugt ist das Hohlprofil im Querschnitt rechteckig. Zur Halterung in der Hülse 25a wird der Haken 33 in die Hülse 25a eingehängt und die Konsole 31 gegen den Federdruck an die Wand 24 gedrückt. Mit einem ersten Keil 37 wird die Konsole 31 in dieser Position an der Wand 24 fixiert. Durch die Feder 35 ist der erste Keil 37 reibschlüssig in der Konsole 31 verspannt. Zur wackelfreien Befestigung wird oberhalb der Konsole 31 in den Zwischenraum zwischen Hülse 25a und Konsole 31 ein zweiter Keil 39 eingeschlagen.

Die Halterung 11 gewährleistet eine rasche und stabile Befestigung eine Nivellierlasers an der Wand 24. Die Wandaussparungen 23 bzw. die ersten Hülsen 25a sind an der Wand 24, insbesondere an Aussenwänden, zwangsläufig in regelmässigen Abständen vorhanden und bekommen durch die Laserhalterung einen Zusatznutzen.

Sind in der Wand 24 zweite Hülsen 25b einbetoniert, so lässt sich die Halterung 11 auch an diesen indirekt befestigen. Dazu ist eine Einhängplatte 41 mit einer Mehrzahl von Querträgern 43 vorgesehen. Die Konsole 31 lässt sich an einem der Querträger mit dem Haken 33 einhängen. Die Einhängplatte 41 ist mit einer Ankerschraube oder einer Ankerstange 45 (und einer Überwurfmutter 47) an der zweiten Hülse 25b befestigt. Die Ankerstange ist ihrerseits in die Hülse 25b eingeschraubt.

Bevorzugt beträgt der Abstand zwischen Haltestange 13 und der Wand 24 zwischen 10 und 30 cm. Dementsprechend ist die Länge der Konsole 31 ebenfalls zwischen 10 und 30 cm. Diese Wahl des Abstandes ermöglicht es, dass der Nivellierlaser montiert und bedient werden kann, ohne dass die Wand 24 im Weg wäre. Andererseits ist die Konsole 31 nicht zu lang, dass sie dem Benutzer des Nivellierlasers im Weg wäre.

Es versteht sich, dass die Halterung 11 auch an anderen Wandaussparungen 23 befestigt werden kann. Hierzu ist die Einhängeplatte 41 an die Wandaussparung anzupassen.

### Legende:

- 11: Halterung für einen Nivellierlaser
- 13: Haltestange
- 15: Erstes Halterohr
- 17: Zweites Halterohr
- 19: Flügelschraube
- 21: Anschlussteil, Befestigungsplatte für Nivellierlaser
- 23: Wandaussparung
- 24: Wand
- 25a,25b: Erste und zweite Hülse zum Einbetonieren
- 27: Drahtbügel
- 29: Vorsprünge
- 31: Konsole
- 33: Haken
- 34: Rahmen der Konsole
- 35: Feder
- 37: Erster Keil
- 39: Zweiter Keil
- 41: Einhängplatte
- 43: Querträger
- 45: Ankerstange
- 47: Überwurfmutter

## Patentansprüche

1. Halterung (11) für einen Nivellierlaser, mit
- einer Haltestange (13), welche ein erstes und zweites Ende aufweist und
- einem Anschlussteil (21), welches am ersten Ende der Haltestange (13) befestigt ist und der lösbaren Halterung des Nivellierlasers dient,
- einer Konsole (31), an welcher das zweite Ende der Haltestange (13) befestigt ist und
- einem Halteelement (33) mit welchem die Halterung (11) an einer Wand (24) befestigbar ist,
**dadurch gekennzeichnet,**
**dass** das Haltelement (33) derart ausgeformt ist, dass das Haltelement (33) ein Haken (33) ist, welcher in einem Vorsprung (36) eines in der Wand vorgesehenen Hohlraums (23) einhängbar ist und
- **dass** der Haken (33) in seiner Länge, welche normal zur Wand (24) orientiert ist, zwischen einer ersten entspannten Position, in welcher der Haken (33) an dem Vorsprung einhängbar ist und einer zweiten verspannten Position, in welcher die Konsole (31) an der Wand (24) fixierbar ist, verstellbar ist.

2. Halterung nach Anspruch 1, **dadurch gekennzeichnet, dass** an dem Haken (33) eine Ausnehmung vorgesehen ist, in welche der Vorsprung (36) hineinragen kann, wodurch die Halterung (11) durch Formschluss an der Wand (24) befestigbar ist.

3. Halterung nach Anspruch 1 oder 2, **dadurch gekennzeichnet, dass** die Konsole (31) einen Rahmen (34) umfasst, in welchem der Haken (33) verschiebbar aufgenommen ist.

4. Halterung nach Anspruch 3, **dadurch gekennzeichnet, dass** in dem Rahmen (34) eine Feder (35) angeordnet ist, welche den Haken (33) in die entspannte Position drückt.

5. Halterung nach Anspruch 1 bis 4, **dadurch gekennzeichnet, dass** die Halterung (11) eine Einhängplatte (41) umfasst und die Konsole (31) an der Einhängplatte (41) eingehängt ist, welche ihrerseits mit einer Schraube (45) an der Wand (24) gehalten werden kann.

6. Halterung nach Anspruch 1 bis 5, **dadurch gekennzeichnet, dass** die Haltestange (13) teleskopierbar ist, indem ein erstes Halterohr (15) relativ zu einem zweiten Halterohr (17) verschiebbar ist.

7. Halterung nach Anspruch 6, **dadurch gekennzeichnet, dass** das erste Halterohr (15) an dem zweiten Halterohr (17) feststellbar ist.

8. Halterung nach Anspruch 1 bis 7, **dadurch gekennzeichnet, dass** der Abstand der Haltestange (13) von dem Haltelement (33) wenigstens 10 cm und höchstens 30 cm beträgt.

9. Halterung nach Anspruch 1 bis 8, **dadurch gekennzeichnet, dass** das Anschlussteil (21) lösbar an dem ersten Ende der Haltestange (13) gehalten ist.

## Claims

1. Mount (11) for a leveling laser with
- a retaining rod (13) that has a first and a second end and
- a connecting part (21) that is fixed at the first end of the retaining rod (13) and serves for the releasable mounting of the leveling laser,
- a bracket (31) to which the second end of the retaining rod (13) is fixed
and
- a retaining element (33) with which the mount (11) can be fixed to a wall (24),
**characterized in**
**that** the retaining element (33) is formed in such a manner that the retaining element (33) is a hook (33) that can be suspended in a projection (36) of a hollow space provided in the wall and
**that** the hook (33) is adjustable in the length which is oriented perpendicularly to the wall (24) between a first released position in which the hook (33) can be suspended in the projection and a second tensioned position in which the bracket (31) can be fixed to the wall (24).

2. Mount according to claim 1, **characterized in that** a recess into which the projection (36) can penetrate is provided on the hook (33) so that the mount (11) can be fixed to the wall (24) by positive locking.

3. Mount according to claim 1 or 2, **characterized in that** the bracket (31) comprises a frame (34) in which the hook (33) is slidably received.

4. Mount according to claim 3, **characterized in that** a spring (35) that pushes the hook (33) into the released position is placed in the frame (34).

5. Mount according to claim 1 to 4, **characterized in that** the mount (11) comprises a hanging plate (41) and the bracket (31) is suspended on the hanging plate (41) that itself can be held on the wall (24) with a screw (45).

6. Mount according to claim 1 to 5, **characterized in that** the retaining rod (13) is telescopic, wherein a first retaining tube (15) is slidable with respect to a second retaining tube (17).

7. Mount according to claim 6, **characterized in that** the first retaining tube (15) is lockable on the second retaining tube (17).

8. Mount according to claim 1 to 7, **characterized in that** the distance of the retaining rod (13) from the retaining element (33) is at least 10 cm and 30 cm at the most.

9. Mount according to claim 1 to 8, **characterized in that** the connecting part (21) is releasably held at the first end of the retaining rod (13).

## Revendications

1. Support (11) pour un laser de nivellement avec
- une tige de retenue (13) qui présente une première et une seconde extrémité et
- un élément de raccord (21) qui est fixé à la première extrémité de la tige de retenue (13) et qui sert au support amovible du laser de nivellement,
- une console (31) à laquelle la seconde extrémité de la tige de retenue (13) est fixée et
- un élément de retenue (33) avec lequel le support (11) peut être fixé à un mur (24),
**caractérisé en ce**
**que** l'élément de retenue (33) est formé de telle manière que l'élément de retenue (33) est un crochet qui peut être accroché dans une saillie (36) d'un espace creux (23) prévu dans le mur et
**que** le crochet (33) est réglable dans sa longueur qui est orientée perpendiculairement au mur (24) entre une première position tendue dans laquelle le crochet (33) peut être accroché à la saillie et une seconde position détendue dans laquelle la console (31) peut être fixée au mur (24).

2. Support selon la revendication 1, **caractérisé en ce qu'**il est prévu sur le crochet (33) un évidement dans lequel la saillie (36) peut pénétrer si bien que le support (11) peut être fixé au mur (4) par complémentarité de formes.

3. Support selon la revendication 1 ou 2, **caractérisé en ce que** la console (31) comprend un cadre (34) dans lequel le crochet (33) est logé en étant coulissant.

4. Support selon la revendication 3, **caractérisé en ce qu'**un ressort (35) qui pousse le crochet (33) dans la position détendue est placé dans le cadre (34).

5. Support selon les revendications 1 à 4, **caractérisé en ce que** le support (11) comprend une plaque d'accrochage (41) et que la console (31) est accrochée à la plaque d'accrochage (41) qui peut, à son tour, être maintenue au mur (24) avec une vis (45).

6. Support selon les revendications 1 à 5, **caractérisé en ce que** la tige de retenue (13) est télescopique, un premier tube de retenue (15) pouvant coulisser par rapport à un second tube de retenue (17).

7. Support selon la revendication 6, **caractérisé en ce que** le premier tube de retenue (15) peut être bloqué sur le second tube de retenue (17).

8. Support selon les revendications 1 à 7, **caractérisé en ce que** la distance de la tige de retenue (13) par rapport à l'élément de retenue (33) est d'au moins 10 cm et d'au plus 30 cm.

9. Support selon les revendications 1 à 8, **caractérisé en ce que** l'élément de raccord (21) est maintenu amovible à la première extrémité de la tige de retenue (13).
